# EUROPEAN PATENT APPLICATION

(11) **EP 2 023 104 A1**
(43) Date of publication of application: **11.02.2009**
(21) Application number: 07738658.9
(22) Date of filing: 15.03.2007
(51) Int. Cl.: G01K 1/14, F16C 19/52, F16C 33/58, F16C 41/00, G01K 7/18

(54) **BEARING DEVICE AND METHOD OF PRODUCING THE SAME**

(30) Priority: 20.04.2006 JP 2006116712; 20.07.2006 JP 2006197879; 20.07.2006 JP 2006197880; 06.09.2006 JP 2006241497
(71) Applicant: NSK Ltd., Tokyo 141-8560 (JP)
(72) Inventor: MORITA, Koichi, Tokyo 141-8560 (JP); OGUCHI, Toshiaki, Tokyo 141-8560 (JP); YOKOYAMA, Keisuke, Tokyo 141-8560 (JP)
(74) Representative: Weser, Wolfgang
(86) International application number: PCT/JP2007/055208
(87) International publication number: WO 2007/122922

(57) **Abstract**

A bearing apparatus including a rolling bearing having an outer race (11), an inner race (12) and a rolling member (13) disposed between two races, and a thermal sensor (TS) measuring an internal temperature of the rolling bearing. Wiring from the thermal sensor extends to outside via a through-hole (11d) formed in a component of the bearing apparatus, and hence the thermal sensor can be disposed in a desired position with excellent flexibility of wiring extension, and can measure a temperature in the desired position of the bearing. The thermal sensor, which can be constructed thin in a small size having the flexibility, can be therefore incorporated in whatever portion of the bearing and can improve a characteristic of detecting an abnormal temperature with a high response of the temperature detection.

## Description

### [Technical Field]

The present invention relates generally to a bearing apparatus including a thermal sensor and a manufacturing method thereof, and more particularly to a bearing apparatus and a manufacturing method thereof, which are suited to use for an alternator as an engine auxiliary, an intermediary pulley, an electromagnetic clutch for a car air-conditioner, a water pump, a hub unit, an electromagnetic clutch for a gas heat pump, a compressor, a linear guide apparatus, a ball screw, and the like.

### [Background Art]

A generally type of bearing apparatus for supporting a rotary component has hitherto, once incorporated, been difficult to undergo periodical inspections, and in a majority of cases the internal inspection is carried out for the first time when inconvenience occurs due to an abnormal temperature. Further, in the case of the bearing for a railway vehicle, a wind turbine, etc, after being used for a fixed period, the bearing apparatus and other portions are disassembled and inspected, and hence it is difficult to predict inconvenience beforehand due to the abnormal temperature. By contrast, the following Patent document 1 discloses a technology of measuring an internal temperature of the bearing by attaching a thermal sensor to a seal member.
[Patent document 1] Japanese Patent Laid-Open Publication No.2002-130263.

### [Disclosure of the Invention]

The technology disclosed in the Patent document 1, however, has a problem that the thermal sensor involves using a stack type thermistor with a restriction in terms of a fitting space due to the generation of a thickness to some extent, and is hard to measure a temperature of an originally-want-to-measure portion in the bearing apparatus. Another problem is that a cost rises due to having many manufacturing steps, and it is difficult to apply the thermal sensor to the bearings for general use.
It is an first object of the present invention, which was devised in view of the problems inherent in the prior arts described above, to provide a bearing apparatus and a manufacturing method thereof that are capable of predicting inconvenience caused by an abnormal temperature, which includes a thermal sensor, exhibiting a high response because of being incorporated into whatever portion of the bearing with no restriction in terms of its fitting space and also configured in a small size to have excellent mass-productivity.

Further, according to the technology disclosed in the Patent document 1, especially the small-sized bearing is extremely hard to incorporate a different member having the considerable thickness such as the stack type thermistor into the bearing.

It is a second object of the present invention, which was devised in view of the problems inherent in the prior arts described above, to provide a bearing apparatus and a manufacturing method thereof that are capable of incorporating the thermal sensor in an arbitrary internal position.

Further, according to the technology disclosed in the Patent document 1, particularly when using the stack type thermistor, the thermal sensor is hard to be worked in a complicated configuration and might be chipped by a strong impact. Moreover, it is difficult to apply the thermal sensor to the bearings for the general use due to a high cost caused by a lot of manufacturing steps. In addition, the interior of the bearing reaches a high temperature, and hence a material for composing the thermal sensor needs paying attention because of the high temperature in the interior of the bearing.

It is a third object of the present invention, which was devised in view of the problems inherent in the prior arts described above, to provide a bearing apparatus and a manufacturing method thereof that are capable of incorporating a thermal sensor having strength and a heat-resistance property into an arbitrary internal position.

Moreover, according to the technology disclosed in the Patent document 1, the thermal sensor involves using the stack type thermistor, and therefore the stack type thermistor needs joining to the bearing. For example, when joined by a bonding agent, the heat of the bearing is transferred to a measuring portion via a layer of the bonding agent and packaging of the stack type thermistor, so that it is difficult to measure a temperature of the bearing with high accuracy. Especially when the temperature of the bearing abruptly rises accompanying some abnormality, an operation of the bearing must be urgently stopped in some cases. A point of time when the stack type thermistor can detect the rise in temperature is after an elapse of time required for the heat transfer, and in the meantime a critical damage might be caused due to the continuous operation of the bearing.

It is a fourth object of the present invention, which was devised in view of the problems inherent in the prior arts described above, to provide a bearing apparatus including a thermal sensor capable of measuring a temperature of the bearing with high accuracy and a high response.

A first bearing apparatus according to the present invention comprises: a rolling bearing including an outer race, an inner race, and rolling members disposed between the outer and inner races; and a thermal sensor, wherein the thermal sensor is constructed by exposure-developing a micro pattern on a resist coated over the surface of a substrate by use of a mask, further depositing a metal film onto the micro pattern by sputtering, and thereafter removing the residual resist.

According to the first bearing apparatus, the thermal sensor is constructed by exposure-developing the micro pattern on the resist coated over the surface of the substrate by use of the mask, further depositing the metal film onto the micro pattern by sputtering, and thereafter removing the residual resist, and can be therefore manufactured extremely thin. The thermal sensor, which is thus manufactured thin, does not require a large fitting space, can be therefore fitted in an arbitrary position within the bearing apparatus, and can measure the temperature of the originally-want-to-measure portion with the high accuracy.

A second bearing apparatus according to the present invention comprises: a rolling bearing including an outer race, an inner race, and rolling members disposed between the outer and inner races; and a thermal sensor which measures an internal temperature of the rolling bearing, wherein the thermal sensor is constructed by forming a metal thin film on an organic film.

According to the second bearing apparatus, the thermal sensor is constructed by forming the metal thin film on the organic film. Therefore, when the organic film is formed on the surface of the member, such as the outer race, of the rolling bearing and the metal thin film is formed thereon, it is feasible to manufacture the extremely thin thermal sensor on the surface of the member. With this contrivance, the thermal sensor can be disposed in the arbitrary position of the bearing apparatus, and can measure the temperature within the bearing with the high accuracy.

It is preferable that the thermal sensor is constructed by exposure-developing a micro pattern on an organic film by use of a mask, further depositing a metal film onto the micro pattern by sputtering, and thereafter removing the residual resist. This type of thermal sensor, which can be manufactured extremely thin, does not therefore need the large fitting space, then can be fitted in the arbitrary position within the bearing apparatus, and can measure the temperature of the originally-want-to-measure portion with the high accuracy.

Further, the thermal sensor is constructed by depositing a metal thin film on to the organic film by sputtering or vacuum vapor deposition. This type of thermal sensor, which can be manufactured extremely thin, does not therefore require the large fitting space, then can be fitted in the arbitrary position within the bearing apparatus, and can measure the temperature of the originally-want-to-measure portion with the high accuracy.

A third bearing apparatus according to the present invention comprises: a rolling bearing including an outer race, an inner race, and rolling members disposed between the outer and inner races; and a thermal sensor which measures an internal temperature of the rolling bearing, wherein the thermal sensor is constructed by forming a metal thin film on a substrate composed of a high polymer material.

According to the third bearing apparatus, the thermal sensor is constructed by forming the metal thin film on the high polymer material. The thermal sensor can be therefore worked in any configurations, can be incorporated in an arbitrary portion of the bearing apparatus that is limited in terms of its fitting space, and can make the measurement with the excellent response and high accuracy. Moreover, polyetheretherketone in the high polymer materials has high strength and superior heat-resistance property and is therefore suitably provided within the bearing apparatus.

It is preferable that the high polymer material is polyetheretherketone (PEEK). Polyetheretherketone is expressed by the following chemical formula.

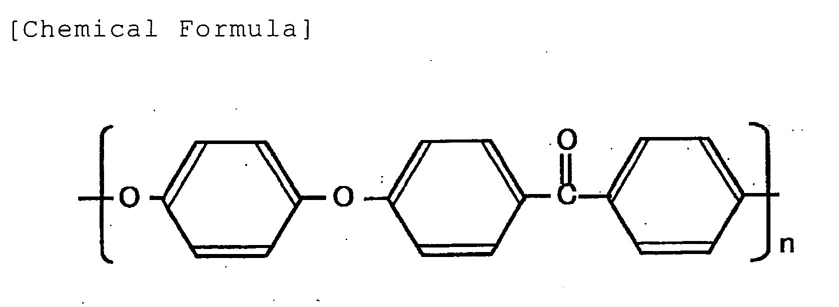

It is preferable that the thermal sensor is constructed by exposure-developing a micro pattern on a resist coated over the surface of a substrate by use of a mask, further depositing a metal film onto the micro pattern by sputtering, and thereafter removing the residual resist. This type of thermal sensor, which can be manufactured extremely thin, does not therefore require the large fitting space, then can be fitted in the arbitrary position within the bearing apparatus, and can measure the temperature of the originally-want-to-measure portion with the high accuracy.

A fourth bearing apparatus according to the present invention comprises: a rolling bearing including an outer race, an inner race, and rolling members disposed between the outer and inner races; and a thermal sensor which measures an internal temperature of the rolling bearing, wherein the thermal sensor is constructed by forming, based on a ink jet method, a conductive thin film on an insulating thin film formed on the surface of a component of the bearing apparatus.

According to the fourth bearing apparatus, the thermal sensor is constructed by forming, based on the ink jet method, the conductive thin film on the insulating thin film formed on the surface of the component of the bearing apparatus, and can therefore measure the temperature of the bearing with the high accuracy and the high response owing to the conductive thin film. This type of thermal sensor, which can be manufactured extremely thin, does not therefore require the large fitting space, then can be fitted in the arbitrary position within the bearing apparatus, and can measure the temperature of the originally-want-to-measure portion with the high accuracy.

In the first through fourth bearing apparatuses, it is preferable that the thermal sensor is disposed on the outer race. Further, it is preferable that the thermal sensor is disposed on the inner race. Still further, when the bearing apparatus includes a retainer which holds the rolling member, it is preferable that the thermal sensor is disposed on the retainer. Yet further, when the bearing apparatus includes a seal that seals a space between the two races, it is preferable that the thermal sensor is disposed on the seal. It is also preferable that the metal is platinum or silver.

A first manufacturing method of a bearing apparatus, according to the present invention, comprising: a rolling bearing including an outer race, an inner race, and rolling members disposed between the outer and inner races; and a thermal sensor, the method comprises steps of: constructing the thermal sensor by exposure-developing a micro pattern on a resist coated over the surface of a substrate by use of a mask, further depositing a metal film onto the micro pattern by sputtering, and thereafter removing the residual resist; and providing the thermal sensor on a component of the rolling bearing.

A second manufacturing method of a bearing apparatus, according to the present invention, comprising: a rolling bearing including an outer race, an inner race, and rolling members disposed between the outer and inner races; and a thermal sensor which measures an internal temperature of the rolling bearing, the method comprises a step of: constructing the thermal sensor by forming an organic film on a components of the rolling bearing and forming a metal thin film on the organic film.

It is preferable that the thermal sensor is constructed by depositing a metal thin film on the organic film by sputtering or vacuum vapor deposition.

A third manufacturing method of a bearing apparatus, according to the present invention, comprising: a rolling bearing including an outer race, an inner race, and rolling members disposed between the outer and inner races; and a thermal sensor which measures an internal temperature of the rolling bearing, the method comprises steps of: constructing the thermal sensor by forming a metal thin film on a substrate composed of a high polymer material; and providing the thermal sensor on a component of the rolling bearing.

It is preferable that the high polymer material is polyetheretherketone (PEEK). Further, it is preferable that the manufacturing method of the bearing apparatus further comprises a step of constructing the thermal sensor by exposure-developing a micro pattern on a resist coated over the surface of a substrate by use of a mask, further depositing a metal film onto the micro pattern by sputtering, and thereafter removing the residual resist.

A fourth manufacturing method of a bearing apparatus, according to the present invention, comprising: a rolling bearing including an outer race, an inner race, and rolling members disposed between the outer and inner races; and a thermal sensor which measures an internal temperature of the rolling bearing, the method comprising steps of: constructing the thermal sensor by forming an insulating thin film on the surface of a component of the bearing apparatus, and forming, based on a ink jet method, a conductive thin film on the insulating thin film.

### [Brief Description of the Drawings]

[FIG. 1] A sectional view taken in a direction of an axis line, showing a bearing apparatus according to a first embodiment.
[FIG. 2] A perspective view showing a thermal sensor 16 in enlargement in FIG. 1.
[FIG. 3] A diagram showing a result of simulating a rise in temperature when operating the bearing apparatus in a first example.
[FIG. 4] A sectional view taken in the direction of the axis line, showing the bearing apparatus according to a second embodiment.
[FIG. 5] A perspective view showing a thermal sensor TS in FIG. 4.
[FIG. 6] A diagram showing a result of simulating the rise in temperature when operating the bearing apparatus in a second example.
[FIG. 7] A sectional view taken in the direction of the axis line, showing the bearing apparatus according to a third embodiment.
[FIG. 8] A perspective view showing the thermal sensor TS in FIG. 7.
[FIG. 9] A diagram showing a result of simulating the rise in temperature when operating the bearing apparatus in a third example.
[FIG. 10] A sectional view taken in the direction of the axis line, showing the bearing apparatus according to a fourth embodiment.
[FIG. 11] An enlarged view showing a sensor pattern P of the thermal sensor TS in enlargement in FIG. 10.
[FIG. 12] A diagram showing a result of simulating the rise in temperature when operating the bearing apparatus in a fourth example.

### Best Mode for Carrying out the Invention

Next, embodiment of the present invention will hereinafter be described with reference to the drawings.

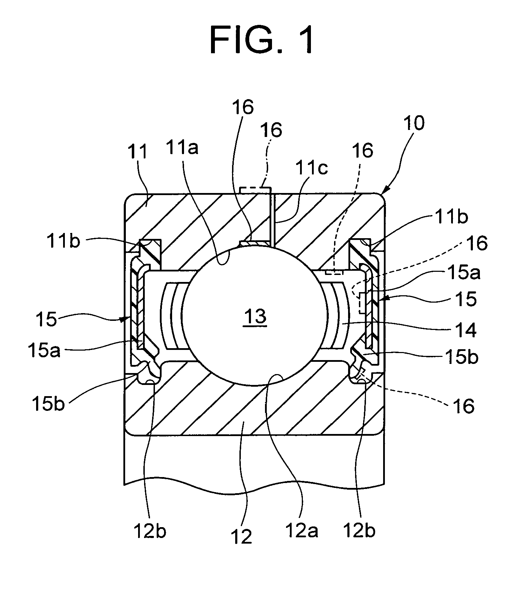

<First Embodiment> FIG. 1 is a sectional view of a bearing apparatus as viewed in a direction along an axis line, according to a first embodiment. A bearing apparatus 10 (which is also termed a rolling bearing) includes an outer race 11, an inner race 12, balls 13 serving as rolling members interposed between the outer race 11 and the inner race 12, a retainer 14 that holds the balls 13 at equal intervals in a peripheral direction, and disc-shaped seals 15, 15 that seal spaces between the outer race 11 and the inner race 12.

The outer race 11 has, along its inner periphery, a raceway surface 11a and fitting grooves 11b, 11b formed in the vicinity of both ends. The inner race 12 has, along its outer periphery, a raceway surface 12a and sealing grooves 12b, 12b formed in the vicinity of both ends.

The seal 15 attached to each fitting groove 11b of the outer race 11 includes a cored bar 15a and a lip portion 15b extending inward in the radial direction from the cored bar 15a. An inner edge of the lip portion 15b contacts on the sealing groove 12b of the inner race 12. The seal 15 is disposed in the bearing apparatus 10 in a way that intrudes an outer edge of the seal 15 into the fitting groove 11b while getting the outer edge elastically deformed in a state where the lip portion 15b contacts on the sealing groove 12b. A general material of this type of seal 15 involves using a steel plate such as SPCC (Steel Plate Cold Commercial quality or Cold Rolled Carbon Steel Sheets and Strip) and SECC (Steel, Electrogalvanized, Cold-rolled Commercial quality) for the cored bar 15a, and a synthetic rubber such as a nitrile rubber, an acrylic rubber, silicone rubber and a fluoro rubber for the lip portion 15b. Note that the seal of the bearing apparatus 10 is not limited to the contact rubber seal but may involve employing a non-contact rubber seal and a non-contact steel plate.

A thermal sensor 16 is embedded in the raceway surface 11a of the outer race 11. Wiring from the thermal sensor 16 is drawn outside via a radially-extended groove 11c formed in the outer race 11. Note that FIG. 1 illustrates a thickness of the thermal sensor 16 in exaggeration.

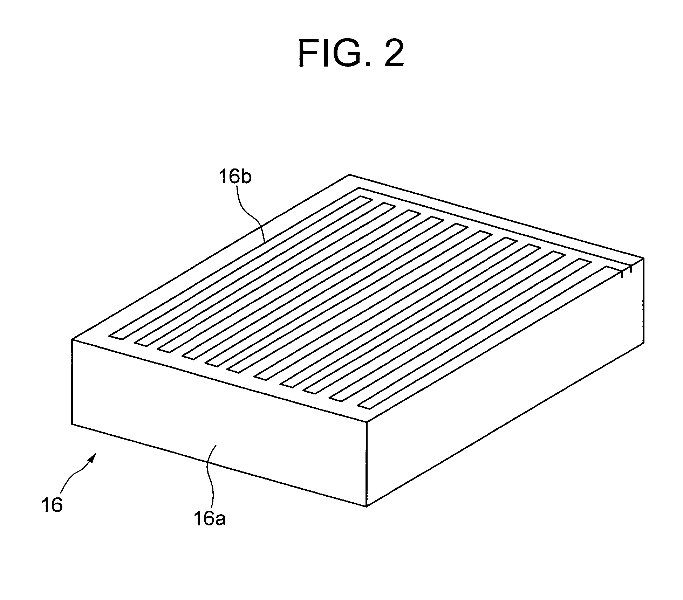

FIG. 2 is an enlarged perspective view of the thermal sensor 16. In FIG. 2, the thermal sensor 16 includes a substrate 16a and a hyperfine resistance pattern 16b formed on the substrate 16a. The resistance pattern 16b is formed of one single platinum line having a narrow line width. An entire length changes and a resistance value also varies due to an expansion or contraction of the substrate 16a depending on a temperature, and hence the temperature can be measured by flowing an electric current through the resistance pattern 16b.

A method of manufacturing the thermal sensor 16 will be described. A photo resist (OFPR800LB made by Tokyo Ohka Kogyo Co., Ltd.), which is approximately 2 µm in thickness, is coated by spin coating over the surface of the silicon substrate (thickness : 200 µm) attached with an oxide film serving as an insulating film and undergoes a pre-baking process at 90°C for 8 min. Thereafter, the resistance pattern 16b is exposed to the light by use of a mask corresponding to this resistance pattern 16b (by use of a mask aligner EMA-400 made by Union Optical Co., Ltd.) and developed by employing a developing solution (MMD 3 made by Tokyo Ohka Kogyo Co. Ltd.). This substrate is finally rinsed in super-pure water for 60 sec.

Thereafter, a platinum film, which is approximate 250 nm in thickness, is deposited on the photo resist by the sputtering method, and the photo resist residual on the substrate is removed by use of a lift-off method employing acetone. After this process, the substrate is diced by a dicing apparatus to a predetermined chip size. The platinum resistance pattern 16b on the chip undergoes wiring.

### <First Example>

Next, an in-depth description of the present invention will be made by way of a first example, however, the present invention is not limited to this example.

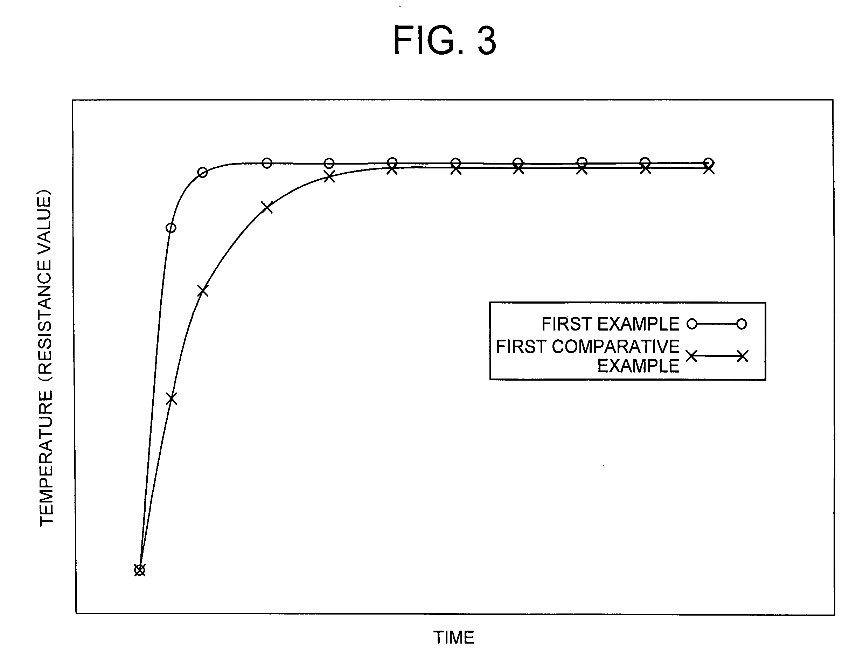

The present inventors, by way of the first example as shown in FIG. 1, attach the thermal sensor 16 manufactured by the method described above to the raceway surface 11a of the outer race 11 and further, by way of a first comparative example, attach the thermal sensor 16 to an external peripheral surface of the outer race 11 as depicted by one-dotted chain line in FIG. 1, and simulate a rise in temperature when operating the bearing apparatus. A result thereof is shown in FIG. 3. Note that the specifications used for the simulation are given as below.
Bearing: single row deep groove ball bearing 6203 (bearing number) made by NSK Ltd..
Number of revolutions: 10,000 rpm.
Rotating time: one hour.

As obvious from FIG. 3, in comparison with a case where the thermal sensor 16 is disposed outside the bearing apparatus 10 as in the first comparative example, when the thermal sensor 16 is disposed within the bearing apparatus 10 as in the first example, it is understood that a change in temperature of the bearing apparatus can be measured with a high response. The thermal sensor 16 according to the first embodiment, because of the resistance pattern 16b is formed by utilizing a semiconductor micro processing technology, can be extremely thinned. Hence, in the interior of the bearing apparatus 10, the thermal sensor 16 can be disposed at a portion or in the vicinity of this portion of which a temperature is desired to be measured with high accuracy. It is therefore feasible to predict highly accurately the inconvenience occurring in the bearing apparatus 10, accompanied with an abnormal rise in temperature as a symptom through the high-response measurement of the temperature.

The first embodiment has been discussed so far, however, the present invention should not be construed in the way of being limited to the embodiment described above, and can be, as a matter of course, properly changed and modified. For example, the thermal sensor 16 may be, as depicted by a dotted line in FIG. 1, disposed on an internal peripheral surface other than the raceway surface 11a of the outer race 11, inside the cored bar 15a of the seal 15, or at the lip portion 15b, and may also be disposed at the inner race 12 and the retainer 14 as the case may be. Further, the thermal sensor 16 may be constructed as a thermocouple type sensor composed of a hetero metal thin film.

### <Second Embodiment>

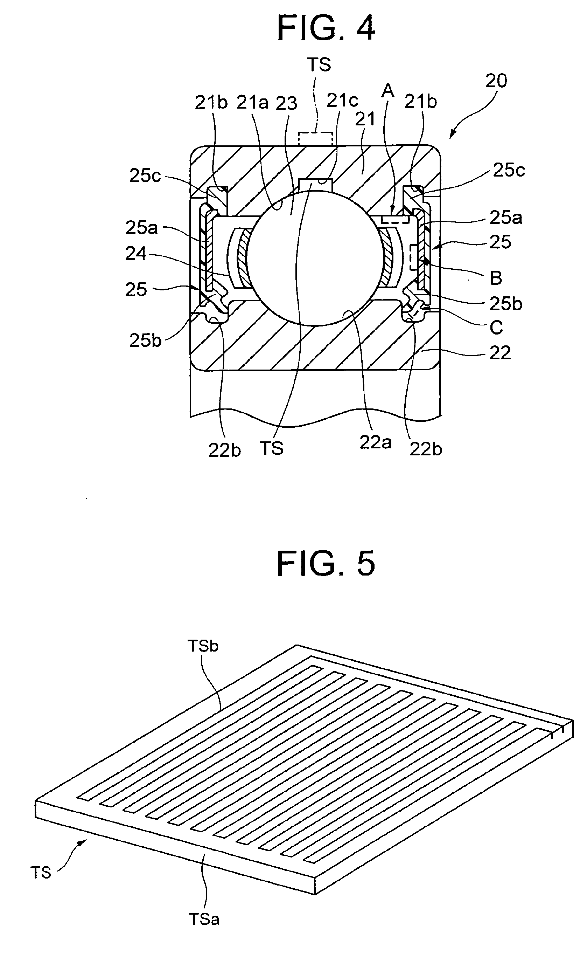

FIG. 4 is a sectional view taken in a direction of an axis line of a rolling bearing used in a second embodiment. A bearing apparatus (which is also termed a rolling bearing) 20 includes an outer race 21, an inner race 22, balls 23 serving as rolling members interposed between the outer race 21 and the inner race 22, a retainer 24 that holds the balls 23 at equal intervals in a peripheral direction, and disc-shaped seals 25, 25 that seal spaces between the outer race 21 and the inner race 22. The balls 23 can be composed of ceramics such as silicon nitride and silicon carbide.

The outer race 21 has, along its inner periphery, a raceway surface 21a and fitting grooves 21b, 21b formed in the vicinity of both ends. The inner race 22 has, along its outer periphery, a raceway surface 22a and sealing grooves 22b, 22b formed in the vicinity of both ends.

The seal 25 includes a cored bar 25a having a main portion, other than a hook portion, composed of a substantially doughnut-shaped metal plate (SPCC, SECC, etc) and the hook portion, a lip portion 25b composed of a synthetic rubber (such as a nitrile rubber, an acrylic rubber, a silicone rubber and a fluoro rubber) that is integrally formed by galvanization on an inner-diametrical side of the cored bar 25a, and a synthetic rubber fitting portion 25c that is integrally formed by galvanization on an outer-diametrical side of the cored bar 25a. The seal 15 is attached to the outer race 21 by engaging with the fitting grooves 21b from outside while getting the fitting portion 25c elastically deformed. In such a state, a front end of the lip portion 25b contacts on the sealing groove 22b. The seal of the bearing apparatus 20 is not limited to the contact rubber seal but may involve employing a non-contact rubber seal and a non-contact steel plate. A thermal sensor TS is provided in a non-contact state with the balls 23 at the center of the raceway surface 21a of the outer race 21. Referring to FIG. 4, the thermal sensor TS is depicted in exaggeration in terms of its thickness.

A method of manufacturing the thermal sensor TS will be discussed. To begin with, an organic film is formed on the surface (which is herein a shallow peripheral groove or cavity 21c formed in the raceway surface 21a of the outer race 21) of a member on which the thermal sensor TS is desired to be disposed. The forming method can involve using a proper method corresponding to an application, such as a vapor deposition method and a sputtering method. The organic film is exemplified by general-purpose plastic, engineering plastic, DLC (Diamond-Like Carbon) and a parylene group. It is preferable in terms of a heat-resistance property to employ the DLC and the parylene group, and especially fluorine-doped parylene is preferable because of having the high heat-resistance property.

As shown in FIG. 5, a mask (not shown) formed with a micro-pattern, which is manufactured by use of a high polymer film and a metal thin film, is placed on an organic film TSa formed on the surface of the member, and a platinum thin film having a thickness on the order of 200 nm is deposited by the sputtering method, thus forming a platinum resistor pattern TSb taking the micro-pattern having a small line width. The thermal sensor TS is thereby formed. Though not illustrated, the wiring from the thermal sensor TS is drawn out to the outside via, e.g., a through-hole (not shown) penetrating in a radial direction the interior of the outer race 21. Note that in the second embodiment, the thermal sensor is constructed by use of the platinum temperature measuring resistor formed in the micro-pattern on the organic film, however, the thermal sensor may also be constructed as a thermocouple in a way that forms two-layered different metal thin films on the organic film by sputtering and vacuum vapor deposition, and the type and the forming method of the metal thin film are not limited to those exemplified above.

### <Second Example>

Next, the in-depth description of the present invention will be made by way of a second example, however, the present invention is not limited to this example.

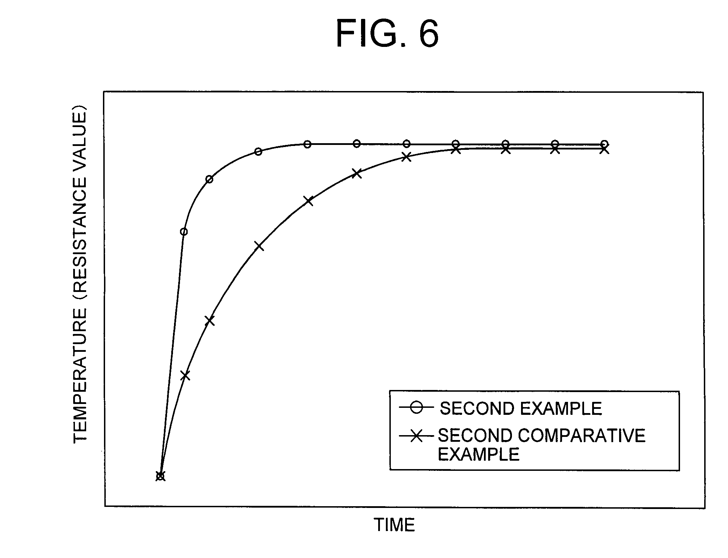

The present inventors, by way of the second example as shown in FIG. 4, attach the thermal sensor TS manufactured by the method described above to the raceway surface 21a of the outer race 21 and further, by way of a second comparative example, attach the thermal sensor TS to an external peripheral surface of the outer race 21 as depicted by one-dotted chain line in FIG. 4, and simulate a rise in temperature when operating the bearing apparatus. A result thereof is shown in FIG. 6. Note that the specifications used for the simulation are given as below.
Bearing: single row deep groove ball bearing 6203 (bearing number) made by NSK Ltd..
Number of revolutions: 10,000 rpm.
Rotating time: one hour.

As apparent from FIG. 6, in comparison with a case where the thermal sensor TS is disposed outside the bearing apparatus 20 as in the second comparative example, when the thermal sensor TS is disposed within the bearing apparatus 20 as in the second example, it is understood that a change in temperature of the bearing apparatus can be measured with a high response. The thermal sensor TS according to the second embodiment, because of the thin micro resistance pattern TSb being formed on the organic film TSa deposited on the surface of the member, can be extremely thinned. Hence, in the interior of the bearing apparatus 20, the thermal sensor TS can be disposed at a portion or in the vicinity of this portion of which a temperature is desired to be measured with high accuracy. It is therefore feasible to predict highly accurately the inconvenience occurring in the bearing apparatus, accompanied with an abnormal rise in temperature as a symptom through the high-response measurement of the temperature.

The second embodiment has been discussed so far, however, the present invention should not be construed in the way of being limited to the embodiment described above, and can be, as a matter of course, properly changed and modified. For example, the thermal sensor TS may be, as depicted by a dotted line, disposed on an internal peripheral surface (a portion A) other than the raceway surface 21a of the outer race 21, at the cored bar 25a (a portion B) of the seal 25, and at the lip portion 25b (a portion C). The incorporating portion is not limited to those described above, however, the thermal sensor can be incorporated in whatever portion of the rolling bearing 20.

### <Third Embodiment>

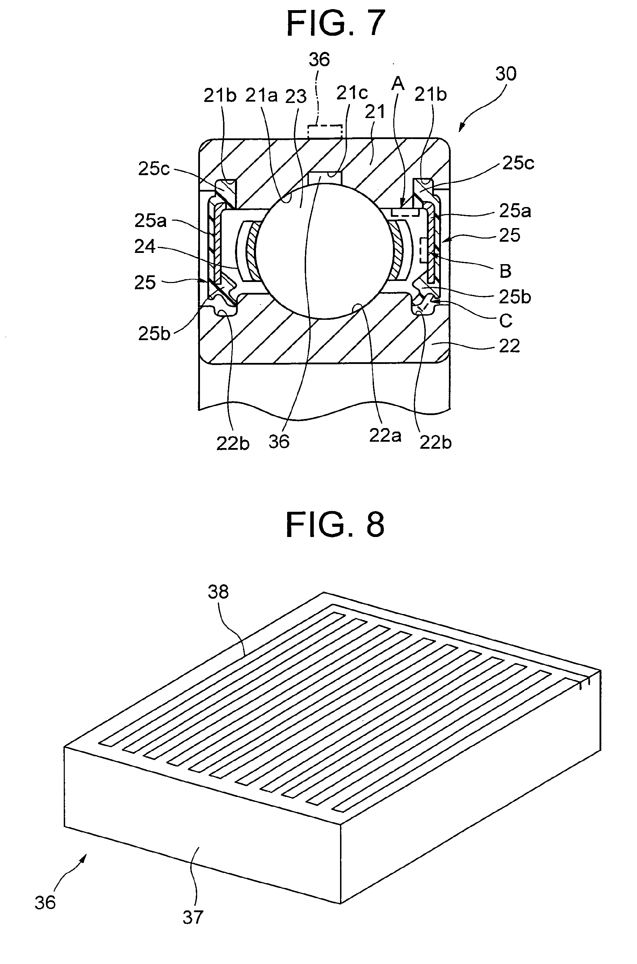

FIG. 7 is a sectional view taken in the direction of the axis line of the rolling bearing used in a third embodiment. A bearing apparatus (which is also termed a rolling bearing) 30 includes the outer race 21, the inner race 22, the balls 23 serving as the rolling members, the retainer 24 that holds the balls 23, and the disc-shaped seals 25,25, which configuration is substantially the same as in FIG. 4. A thermal sensor 36 is provided in the non-contact state with the balls 23 at the center of the raceway surface 21a of the outer race 21. Referring to FIG. 7, the thermal sensor 36 is depicted in exaggeration in terms of its thickness.

FIG. 8 is a perspective view of the thermal sensor 36. In FIG. 8, the thermal sensor 36 includes a substrate 37, a micro resistance pattern 38 formed on the surface of the substrate 37. The micro resistance pattern 38 consists of a single platinum wire having a narrow line width. The thermal sensor 36 utilizes a change in resistance value with a change in total length of the resistance pattern 38 as the substrate 37 expands and contracts corresponding to the temperature, and can thus acquire the temperature.

A method of manufacturing the thermal sensor 36 will be described. A photo resist (OFPR800LB made by Tokyo Ohka Kogyo Co., Ltd.), which is approximately 2 µm in thickness, is coated by spin coating over the surface of a plate-like substrate (thickness: 200 µm) formed by injecting a PEEK (polyetheretherketone) resin in a plate shape and undergoes a pre-baking process at 90°C for 90 sec (one minute and 30 seconds). Thereafter, the resistance pattern TSb is exposed to the light by use of a mask corresponding to this resistance pattern TSb (by use of the mask aligner EMA-400 made by Union Optical Co., Ltd.) and developed by employing the developing solution (MMD 3 made by Tokyo Ohka Kogyo Co. Ltd.). This substrate is finally rinsed in super-pure water for 60 sec.

Thereafter, a platinum film, which is approximate 200 nm in thickness, is deposited on the photo resist by the sputtering method, and the photo resist residual on the substrate is removed by use of the lift-off method employing acetone, thereby forming the resistance pattern 38. Further, after the substrate has been diced by the dicing apparatus to a predetermined chip size, the wiring is connected to the platinum resistance pattern 38 on the chip.

According to the third embodiment, the PEEK used for the substrate 37 is a high polymer material and can be therefore worked in a complicated shape at an extremely low cost and consequently suited to the thermal sensor 36 incorporated into the bearing apparatus. Moreover, this material has an excellent heat-resistance property showing 143°C in glass transition temperature and 343°C in melting temperature, and has a chemical resistance property against a wide range of organic/inorganic liquids because of its being semi-crystalline. Accordingly, the bearing apparatus including this type of thermal sensor 36 is suited particularly to the bearing applied to an automobile and the bearing for a machine tool, in which LLC (Long Life Coolant), a high-temperature oil and moisture exist. On the occasion of molding the substrate composed of the PEEK, the molding method thereof may involve using an injection molding method and an extrusion molding method but is not limited particularly. Moreover, the third embodiment exemplifies the platinum temperature measuring resistor as the thermal sensor, however, the thermocouple using the different metal thin films may also be available, and the type and the forming method of the metal thin film are not limited to those described above.

### <Third Example>

Next, the in-depth description of the present invention will be made by way of a third example, however, the present invention is not limited to this example.

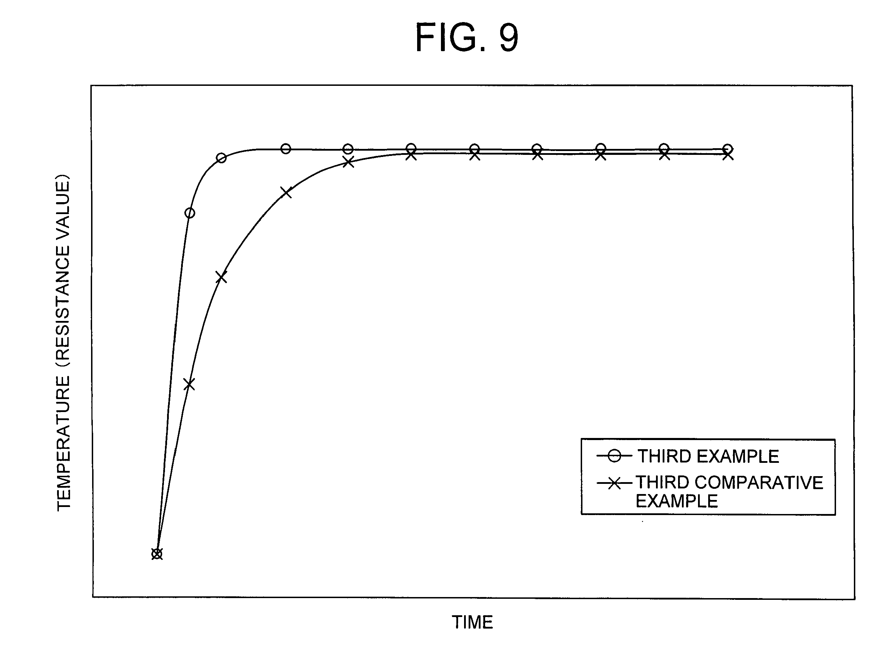

The present inventors, by way of the third example as shown in FIG. 7, attach the thermal sensor 36 manufactured by the method described above to the raceway surface 21a of the outer race 21 and further, by way of a third comparative example, attach the thermal sensor 36 to an external peripheral surface of the outer race 21 as depicted by one-dotted chain line in FIG. 7, and simulate a rise in temperature when operating the bearing apparatus. A result thereof is shown in FIG. 9. Note that the specifications used for the simulation are given as below.
Bearing: single row deep groove ball bearing 6203 (bearing number) made by NSK Ltd..
Number of revolutions: 10,000 rpm.
Rotating time: one hour.

As apparent from FIG. 9, in comparison with a case where the thermal sensor 36 is disposed outside the bearing apparatus 30 as in the third comparative example, when the thermal sensor 36 is disposed within the bearing apparatus 30 as in the third example, it is understood that a change in temperature of the bearing apparatus can be measured with a high response.

The thermal sensor 36 according to the third embodiment, because of the thin micro resistance pattern 38 being formed on PEEK substrate 37, can be extremely thinned. Hence, in the interior of the bearing apparatus 30, the thermal sensor 36 can be disposed at a portion or in the vicinity of this portion of which a temperature is desired to be measured with high accuracy. It is therefore feasible to predict highly accurately the inconvenience occurring in the bearing apparatus, accompanied with an abnormal rise in temperature as a symptom through the high-response measurement of the temperature.

The third embodiment has been discussed so far, however, the present invention should not be construed in the way of being limited to the embodiment described above, and can be, as a matter of course, properly changed and modified. For example, the thermal sensor 36 may be, as depicted by a dotted line in FIG. 7, disposed on an internal peripheral surface (a portion A) other than the raceway surface 21a of the outer race 21, at the cored bar 25a (a portion B) of the seal 25, and at the lip portion 25b (a portion C). The incorporating portion is not limited to those described above, however, the thermal sensor can be incorporated in whatever portion of the rolling bearing 30.

### <Fourth Embodiment>

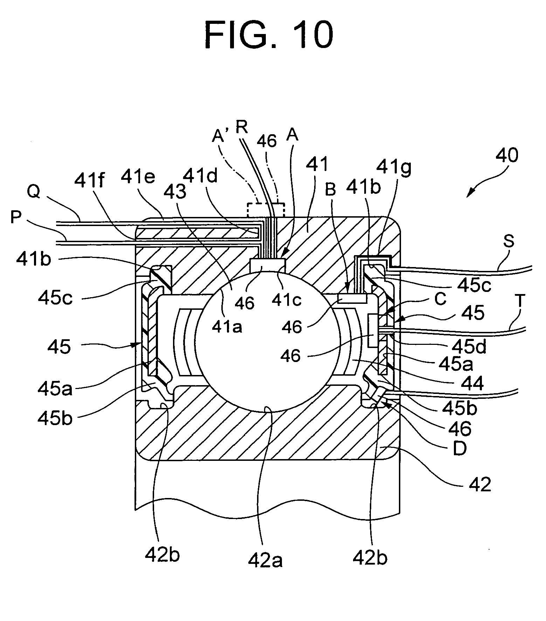

A fourth embodiment will be described with reference to FIG. 10. FIG. 10 is a sectional view taken in the direction of the axis line of the rolling bearing used in the fourth embodiment. A bearing apparatus (which is also termed a rolling bearing) 40 includes an outer race 41, an inner race 42, balls 43 serving as the rolling members between the outer and inner races 41, 42, a retainer 44 that holds the balls 43 at equal intervals in a peripheral direction, and disc-shaped seals 45, 45 that seal spaces between the outer race 41 and the inner race 42. The balls 43 can be composed of ceramics such as silicon nitride and silicon carbide.

The outer race 41 has, along its inner periphery, a raceway surface 41a and fitting grooves 41b, 41b formed in the vicinity of both ends. The inner race 42 has, along its outer periphery, a raceway surface 42a and sealing grooves 42b, 42b formed in the vicinity of both ends.

The seal 45 includes a cored bar 45a having a main portion, other than a hook portion, composed of a substantially doughnut-shaped metal plate (SPCC, SECC, etc) and the hook portion, a lip portion 45b composed of a synthetic rubber (such as a nitrile rubber, an acrylic rubber, a silicone rubber and a fluoro rubber) that is integrally formed by galvanization on an inner-diametrical side of the cored bar 45a, and a synthetic rubber fitting portion 45c that is integrally formed by galvanization on an outer-diametrical side of the cored bar 45a. The seal 45 is attached to the outer race 41 by engaging with the fitting grooves 41b from outside while getting the fitting portion 45c elastically deformed. In such a state, a front end of the lip portion 45b contacts on the sealing groove 42b. Note that the seal of the bearing apparatus 40 is not limited to the contact rubber seal but may involve employing a non-contact rubber seal and a non-contact steel plate. A thermal sensor 46 is provided in a non-contact state with the balls 43 at the center of the raceway surface 41a of the outer race 41. Referring to FIG. 4, the thermal sensor 46 is depicted in exaggeration in terms of its thickness.

A method of manufacturing the thermal sensor 46 will be discussed. To start with, a high-temperature resistant insulating thin film M of DLC (Diamond-Like Carbon) having a thickness of 1 µm is formed on the surface (which is herein a shallow peripheral groove or cavity 41c formed in the raceway surface 41a of the outer race 41) of a member on which the thermal sensor is desired to be disposed. A micro sensor pattern P is formed of a silver film thereon by an ink jet method. Thereafter, sensor pattern P is baked, thereby enabling the thermal sensor TS to be disposed on the outer race 11 without using any bonding agent. The wiring of the thermal sensor may similarly undergo patterning, depending on an actually-disposed portion.

The sensor pattern P is formed by jetting a fluid dispersion containing, e.g., silver ultrafine particles dispersing in an independent state as an ink from a micro nozzle over the high-temperature resistant insulating thin film M. The jetted ink is evaporated by its being baked or left to stand in a low-vacuum gas, thereby enabling a strong silver film to be acquired. The conductive thin film can be formed by employing the particles of gold, copper and aluminum without being limited to silver. Note that the formation of the thin film based on the ink jet method is disclosed in detail in, e.g., Japanese Patent Laid-Open Publication No.2003-209341, and hence its explanation is omitted hereinafter.

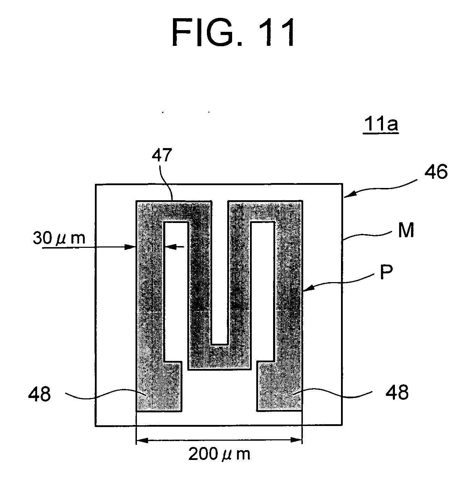

FIG. 11 is an enlarged view showing the sensor pattern P of the thermal sensor 46. The wirings connected to the outside are connected to terminals 48, 48 provided at both ends of a zigzag pattern line 47. The pattern P is a micro pattern that is 200 µm in entire width and approximately 30 µm in line width. If the portion formed with the sensor pattern P gets deformed due to thermal expansion, a length of the pattern line 47 changes with the result that a resistance value thereof varies. It is therefore possible to measure the temperature with the high accuracy by detecting a change in electric current flowing from outside.

In FIG. 10, when the thermal sensor 46 is disposed in a position A within the raceway surface 41a of the outer race 41, a hole 41d penetrating the outer race 41 in the radial direction is formed, and the wiring R connected to the thermal sensor 46 can be drawn out to the outside in the radial direction via the hole 41d. Note that if the outer race 41 is, for example, disposed within an unillustrated cylindrical portion, the wiring R can not be drawn out in the radial direction of the bearing 40 as the case may be. In such a case, a groove 41 extending in the direction of the axis line is formed along the outer periphery of the outer race 41, and the wiring Q connected to the thermal sensor 46 can be also drawn out to the outside in the direction of the axis line via the hole 41d and the groove 41e. Alternatively, a groove 41f extending in direction of the axis line, which intersects the hole 41d inside, is formed by boring the side face of the outer race 41, and the wiring P connected to the thermal sensor 46 can be also drawn out to the outside in the direction of the axis line via the hole 41d and the groove 41f.

As a modified example of the fourth embodiment, the thermal sensor 46 can be disposed in a position B on the inner peripheral surface other than the raceway surface 41a of the outer race 41. In such a case, a groove 41g extending in the direction of the axis line is further formed in the bottom of the fitting groove 41b, and the wiring S connected to the thermal sensor 46 can be also drawn out to the outside in the direction of the axis line via the groove 41g. Further, another modified example of the fourth embodiment is that the thermal sensor 46 can be disposed in a position C on the inside surface of the cored bar 45a of the seal 45. In such a case, a hole 45d penetrating in the direction of the axis line the seal 45 is formed, and the wiring T connected to the thermal sensor 46 can be drawn out to the outside in the direction of the axis line via the hole 45d. Still another modified example of the fourth embodiment is that the thermal sensor 46 can be disposed in a position D on the outside surface of the lip portion 45b of the seal 45. In such a case, the wiring U connected to the thermal sensor 46 can be directly drawn out to the outside.

### <Fourth Example>

Next, the present invention will be described in greater detail by way of a fourth example, however, the present invention is not limited to this example.

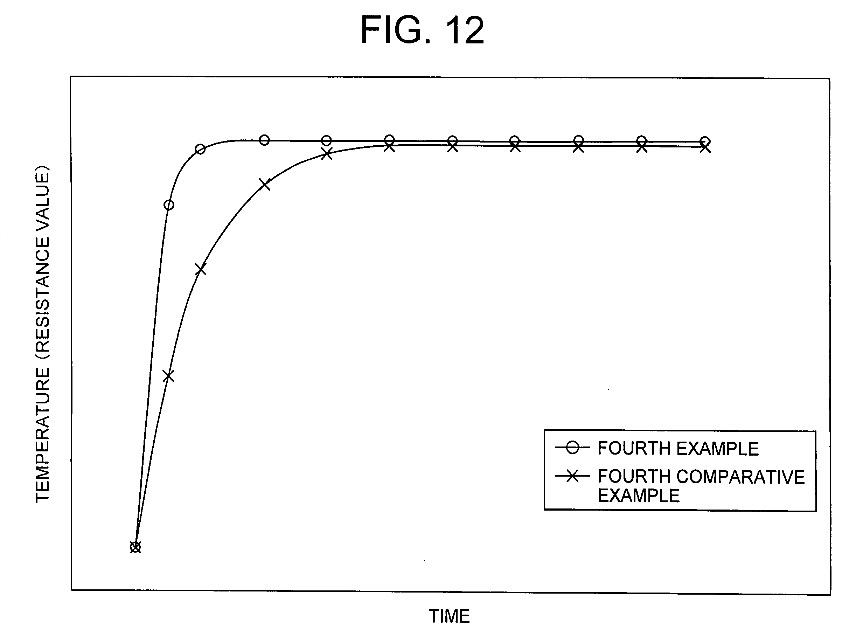

The present inventors, by way of the fourth example as shown in FIG. 10, attach the thermal sensor 46 manufactured by the method described above to the raceway surface 11a (the position A) of the outer race 11 and further, by way of a fourth comparative example, attach the thermal sensor 46 to an external peripheral surface (a position A') of the outer race 11 as depicted by one-dotted chain line in FIG. 10, and simulate a rise in temperature when operating the bearing apparatus. A result thereof is shown in FIG. 12. Note that the specifications used for the simulation are given as below.
Bearing: single row deep groove ball bearing 6203 (bearing number) made by NSK Ltd..
Number of revolutions: 10,000 min⁻¹.
Rotating time: one hour.

As apparent from FIG. 12, in comparison with a case where the thermal sensor 46 is disposed outside the bearing apparatus 40 as in the fourth comparative example, when the thermal sensor 46 is disposed within the bearing apparatus 40 as in the fourth example, it is understood that a change in temperature of the bearing apparatus can be measured with a high response.

The thermal sensor 46 in the fourth embodiment has the conductive thin film P, which undergoes patterning by the ink jet method, is provided on the insulating thin film M formed on the surface of the outer race 41 defined as the component of the bearing 40, and can therefore measure the temperature of the bearing with the high accuracy and the high response through the conductive thin film P. Accordingly, the measurement of the temperature with the high response enables the highly-accurate prediction of the inconvenience occurring on the bearing apparatus, accompanied with an abnormal rise in temperature as a symptom.

The fourth embodiment has been discussed so far, however, the present invention should not be construed in the way of being limited to the embodiment described above, and can be, as a matter of course, properly changed and modified. For example, the thermal sensor 46 in FIG. 11 may also be composed of another metal such as platinum.

### [Industrial Applicability]

As described above, the bearing apparatus according to the present invention is useful in such a point that the thermal sensor can measure the temperature in a desired position of the bearing, the wiring extension flexibility is excellent, there is durability without ay restriction in the fitting position of the thermal sensor, and the thermal sensor can improve a characteristic of detecting the abnormal temperature.

## Claims

1. A bearing apparatus comprising:
a rolling bearing including an outer race, an inner race, and rolling members disposed between said outer and inner races; and
a thermal sensor,
wherein said thermal sensor is constructed by exposure-developing a micro pattern on a resist coated over the surface of a substrate, by use of a mask, further depositing a metal film onto the micro pattern by sputtering, and thereafter removing the residual resist.

2. A bearing apparatus comprising:
a rolling bearing including an outer race, an inner race, and rolling members disposed between said outer and inner races; and
a thermal sensor which measures an internal temperature of said rolling bearing,
wherein said thermal sensor is constructed by forming a metal thin film on an organic film.

3. A bearing apparatus according to claim 2,
wherein said thermal sensor is constructed by depositing a metal thin film onto the organic film by sputtering or vacuum vapor deposition.

4. A bearing apparatus comprising:
a rolling bearing including an outer race, an inner race, and rolling members disposed between said outer and inner races; and
a thermal sensor which measures an internal temperature of said rolling bearing,
wherein said thermal sensor is constructed by forming a metal thin film on a substrate composed of a high polymer material.

5. A bearing apparatus according to claim 4,
wherein the high polymer material is polyetheretherketone.

6. A bearing apparatus according to claim 4 or 5,
wherein said thermal sensor is constructed by exposure-developing a micro pattern on a resist coated over the surface of a substrate, by use of a mask, further depositing a metal film onto the micro pattern by sputtering, and thereafter removing the residual resist.

7. A bearing apparatus comprising:
a rolling bearing including an outer race, an inner race, and rolling members disposed between said outer and inner races; and
a thermal sensor which measures an internal temperature of said rolling bearing,
wherein said thermal sensor is constructed by forming, based on an ink jet method, a conductive thin film on an insulating thin film formed on the surface of a component of said bearing apparatus.

8. A bearing apparatus according to any one of claims 1 through 7, wherein said thermal sensor is disposed on said outer race.

9. A bearing apparatus according to any one of claims 1 through 8, wherein said thermal sensor is disposed on said inner race.

10. A bearing apparatus according to any one of claims 1 through 9, further comprising a retainer which holds said rolling members,
wherein said thermal sensor is disposed on said retainer.

11. A bearing apparatus according to any one of claims 1 through 10, further comprising a seal which seals a space between said inner and outer races,
wherein said thermal sensor is disposed on said seal.

12. A bearing apparatus according to any one of claims 1 through 11, wherein the metal is platinum or silver.

13. A manufacturing method of a bearing apparatus comprising:
a rolling bearing including an outer race, an inner race, and rolling members disposed between said outer and inner races; and
a thermal sensor,
said method comprising steps of:
constructing said thermal sensor by exposure-developing a micro pattern on a resist coated over the surface of a substrate, by use of a mask, further depositing a metal film onto the micro pattern by sputtering, and thereafter removing the residual resist; and
providing said thermal sensor on a component of said rolling bearing.

14. A manufacturing method of a bearing apparatus comprising:
a rolling bearing including an outer race, an inner race, and rolling members disposed between said outer and inner races; and
a thermal sensor which measures an internal temperature of said rolling bearing,
said method comprising a step of:
constructing said thermal sensor by forming an organic film on a components of said rolling bearing and forming a metal thin film on the organic film.

15. A manufacturing method of a bearing apparatus according to claim 14, wherein said thermal sensor is constructed by depositing a metal thin film on the organic film by sputtering or vacuum vapor deposition.

16. A manufacturing method of a bearing apparatus comprising:
a rolling bearing including an outer race, an inner race, and rolling members disposed between said outer and inner races; and
a thermal sensor which measures an internal temperature of said rolling bearing,
said method comprising steps of:
constructing said thermal sensor by forming a metal thin film on a substrate composed of a high polymer material; and
providing said thermal sensor on a component of said rolling bearing.

17. A manufacturing method of a bearing apparatus according to claim 16, wherein the high polymer material is polyetheretherketone.

18. A manufacturing method of a bearing apparatus according to claim 16 or 17, further comprising a step of constructing said thermal sensor by exposure-developing a micro pattern on a resist coated over the surface of a substrate by use of a mask, further depositing a metal film onto the micro pattern by sputtering, and thereafter removing the residual resist.

19. A manufacturing method of a bearing apparatus comprising:
a rolling bearing including an outer race, an inner race, and rolling members disposed between said outer and inner races; and
a thermal sensor which measures an internal temperature of said rolling bearing,
said method comprising steps of:
constructing said thermal sensor by forming an insulating thin film on the surface of a component of said bearing apparatus, and forming, based on an ink jet method, a conductive thin film on the insulating thin film.
